# NEUE EUROPÄISCHE PATENTSCHRIFT

(11) **EP 0 567 113 B2**
(45) Veröffentlichungstag und Bekanntmachung des Hinweises auf die Entscheidung über den Einspruch: **29.11.2000**
(45) Hinweis auf die Patenterteilung: 09.04.1997
(21) Anmeldenummer: 93106542.9
(22) Anmeldetag: 22.04.1993
(51) Int. Cl.: B60R 21/26

(54) **Treibgasgeneratoranordnung**
Gas generator device
Dispositf générateur de gaz

(30) Priorität: 22.04.1992 DE 4213265
(43) Veröffentlichungstag der Anmeldung: 27.10.1993
(73) Patentinhaber: HS Technik und Design Technische Entwicklungen GmbH, 82234 Wessling (DE)
(72) Erfinder: Specht, Martin, Dipl.Ing., 82340 Feldafing (DE); Meyer, Rudolf, Dipl. Ing., 85235 Odelzhausen (DE)
(74) Vertreter: Nöth, Heinz, Dipl.-Phys.

(56) Entgegenhaltungen:
- DE-U- 9 103 660
- FR-A- 2 214 491
- US-A- 2 848 872
- US-A- 5 062 367

## Beschreibung

Die Erfindung betrifft eine Treibgasgeneratoranordnung mit den Merkmalen des Oberbegriffs des Anspruchs 1 sowie des Anspruchs 2.

Aus der gattungsbildenden US-A-5 062 367 ist ein Gasgenerator zum Aufblasen eines Airbags bekannt. Ein Treibmittel ist in einem feuchtigkeitsdichten Behältnis untergebracht, das ein zylindrisches Unterteil mit hochgebogener Seitenwand sowie ein abdeckendes zylindrisches Oberteil mit herabgezogener Seitenwand aufweist, wobei die jeweiligen Seitenwände teilweise überlappend angeordnet sind. Am Innenumfang der inneren Seitenwand des Oberteils ist ein Verbrennungsraumfilter angeordnet, der als ein die erzeugten Verbrennungsgase durchlassendes feinmaschiges Drahtnetz ausgebildet ist. Das Behältnis, das aus einem Thermoplast-Kunststoff oder aus Aluminium besteht, ist in einem mit einem Boden und einer Seitenwand topfförmig ausgebildeten Zylinder eines Gehäuses ohne Bewegungsmöglichkeit fest umschlossen angeordnet. Das erzeugte Treibgas kann durch radiale Bohrungen und aus dem Gehäuse austreten.

Aufgabe der Erfindung ist es, eine derartige Treibgasgeneratoranordnung zu schaffen, mit der vielseitige Einsatzmöglichkeiten des Treibgasgenerators bei wirkungsvoller Ausnützung des beim Zünden freigesetzten Treibgases erreicht werden.

Diese Aufgabe wird durch eine Treibgasgeneratoranordung mit den Merkmalen des Anspruchs 1 gelöst. Der Treibgasgenerator kann in der rohrförmigen Halteeinrichtung ohne exakte Positionsausrichtung sowohl in axialer als auch in Umfangsrichtung angeordnet sein, wodurch sich eine erleichterte Montage ergibt. In jedem Fall ist der Treibgasgenerator aber nach Zündung des Treibsatzes an der Halte- und Führungseinrichtung abgestützt und fixiert.

Diese Aufgabe wird erfindungsgemäß auch durch eine Treibgasgeneratoranordung mit den Merkmalen des Anspruchs 2 gelöst. Der Treibgasgenerator weist ein Gehäuse auf, das eine Ausblasdüseneinrichtung enthält, die eine gestuft ausgebildete Ausblasdüsenöffnung aufweist, die somit in vorteilhafter Weise an unterschiedliche Treibladungen anpaßbar ist.

Die durch das Innenrohr und das Außenrohr gebildete Doppelwand des Treibgasgeneratorgehäuses ist in einer die gesamte Außenseite der Doppelwand umfassenden Halteeinrichtung angeordnet. Dadurch, daß das Innenrohr und gegebenenfalls auch das Außenrohr aus einem durch den vom gezündeten Treibmittel erzeugten Treibgasdruck radial nach außen expandierbarem Material besteht, wird erreicht, daß das Gehäuse des Treibgasgenerators gegen die umfassende Halteeinrichtung, welche beispielsweise als Rohr ausgebildet sein kann, angedrückt wird, so daß das Gehäuse nach Zündung des Treibmittels sich gegenüber dieser Führung nicht mehr bewegt. Auf diese Weise läßt sich ein Druckgasraum erreichen, der einerseits durch die das Treibgasgehäuse umfassende Halteeinrichtung und andererseits durch den Treibgasgenerator bzw. dessen Gehäuse abgeschlossen ist, so daß das Treibgas in einer bestimmten Richtung zur Wirkung gebracht werden kann.

Diese Wirkung kann beispielsweise dahingehend ausgenützt werden, daß das freigesetzte Treibgas auf einen Kolben wirkt, das über ein Verbindungsmittel mit dem Gurtband eines Sicherheitsgurtes bzw. mit einem Aufrollautomaten eines Sicherheitsgurtes in einem Kraftfahrzeug verbunden ist. Der vom Treibgas angetriebene Kolben kann auf diese Weise über das Verbindungsmittel, beispielsweise ein Zugseil oder dergl., eine im Sicherheitsgurt vorhandene Gurtlose beseitigen. Der Kolben kann auch mit anderen zu bewegenden Fahrzeugteilen verbunden sein .

Ferner kann das Treibgas ausgenützt werden zum Aufblasen eines Airbags in einem Airbagsystem eines Kraftfahrzeugs.

Durch den besonderen Aufbau des Treibgasgenerators mit einem doppelwandigen Gehäuse wird außerdem eine einfache Fertigung des Treibgasgenerators erreicht. Hierzu ist es lediglich erforderlich, beispielsweise in das Innenrohr die Zündeinrichtung, das Treibmittel und gegebenenfalls die zwischen Zündeinrichtung und Treibmittel vorzusehende, Temperatur erhöhende Treibgaskette anzuordnen. Diese Anordnung wird dann in das Außenrohr eingeschoben. Eine einwandfreie Verbindung läßt sich durch ein Ineinandergreifen von Außenund Innenkerben, die am Innen- und Außenrohr vorgesehen sind, erreichen. Diese Kerben können beim Ineinanderschieben von Innen- und Außenrohr zunachst versetzt zueinander sein und dann durch. Verdrehen miteinander in Eingriff gebracht werden. Es ist jedoch auch möglich, daß die Kerbverzahnung durch Ineinanderschnappen der Kerben erreicht wird.

In bevorzugter Weise hat das doppelwandige Gehäuse des Treibgasgenerators eine zylindrische Form. Auch die Führungsbohrung des Halterohres ist zylindrisch ausgebildet und an den Außendurchmesser des doppelwandigen Treibgasgeneratorgehäuses angepaßt.

Nach dem Zünden des Treibsatzes wird aufgrund des Treibgasdruckes durch radiale Expansion des Treibgasgeneratorgehäuses dieses an der Innenseite des Führungsrohres abgestützt und fixiert, so daß zusätzliche Abstützhilfen zur Verankerung des Treibgasgenerators im Halterohr nicht erforderlich sind. Das abgeblasene Treibgas kann in der gewünschten Weise zur Einwirkung gebracht werden. Wenn der Treibgasgenerator vor der Zündung des Treibmittels, z.B. aufgrund seiner trägen Masse bei einer überhöhten auf ihn einwirkenden Beschleunigung oder Abbremsung beweglich sein soll, dient die Halteeinrichtung als Führungseinrichtung für den Treibgasgenerator bei dieser Bewegung.

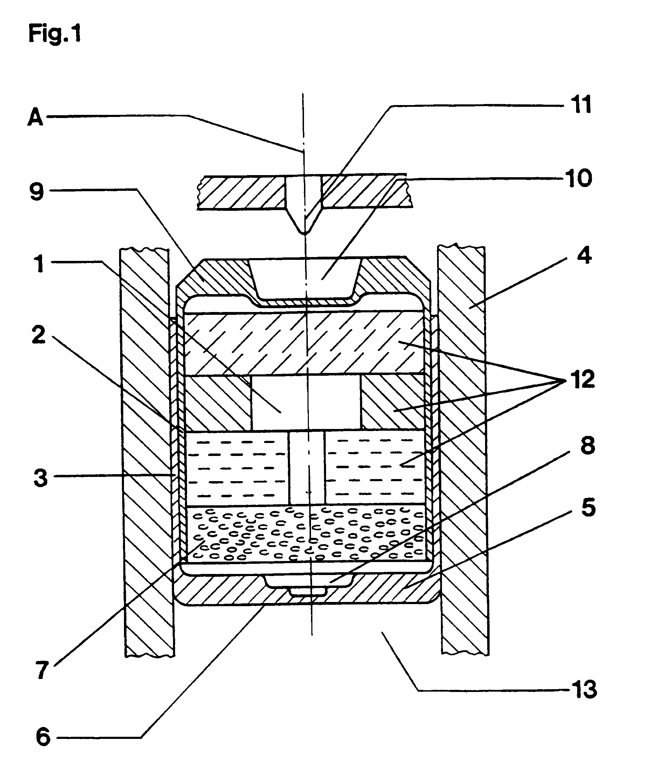

Anhand der Figuren 1 bis 5 wird an Ausführungsbeispielen die Erfindung noch näher erläutert.

Die in den Figuren in schnittbildlicher Darstellung gezeigten Treibgasgeneratoranordnungen besitzen einen Treibgasgenerator
1. Dieser Treibgasgenerator ist in einer als Halte- und/oder Führungsrohr 4 ausgebildeten Halte- bzw. Führungseinrichtung angeordnet. Das Treibgasgeneratorgehäuse ist doppelwandig ausgebildet. Zur Erzielung der Doppelwandung sind ein Innenronr 2 und ein Außenrohr 3 ineinander gesteckt. Der Außenumfang des Außenrohres 3 liegt an der Innenwand des Führungsrohres 4 an. In bevorzugter Weise ist die Treibgasgeneratoranordnung zylindrisch ausgebildet und konzentrisch um eine Achse A angeordnet.

Im Innern des doppelwandigen Treibgasgeneratorgehäuses befindet sich ein Treibmittel 7 und eine Zündeinheit 10, die als Zündplättchen oder Zündhütchen ausgebildet sein kann. Sie befindet sich im stirnseitigen Abschluß (Abdeckung 9). Das Treibmittel 7 kann, sobald es auf eine bestimmte Temperatur erhitzt wird, ein Treibgas mit hohem Treibgasdruck erzeugen. Zwischen Zündeinrichtung 10 und Treibmittel 7 ist zur Erzeugung der erforderlichen Temperatur eine in bekannter Weise ausgebildete Treibgaskette 12 im Treitigasgehäuse vorgesehen. Die beiden ineinandergeschobenen Rohre 2 und 3 haben an jeweils einem Ende einen Rohrabschluß, so daß die beiden ineinandergeschobenen Gehäuseteile des doppelwandigen Treibgasgehäuses becherförmig ausgebildet sind. Der stirnseitige Abschluß bzw. das Verschließelement 5 des Außenrohres 3 (in der Figur der unten liegende Gehäuseabschluß) besitzt eine Ausblasdüseneinrichtung 6. Solange das Treibmittel 7 noch nicht gezündet ist und kein Treibgas entstanden ist, ist die Ausblasdüseneinrichtung 6 verschlossen, beispielsweise mit Hilfe eines Abdecklackes. Der Verschluß der Ausblasdüseneinrichtung 6 wird durch den Druck des Treibgases geöffnet. Die Ausblasdüseneinrichtung 6 besitzt eine gestuft ausgebildete Ausblasdüsenöffnung 8. Mit den variablen Ausblasdurchmessern der Ausblasdüsenöffnung 8 ist eine Anpassung an unterschiedliche Treibladungen möglich.

Die Zündeinrichtung 10 ist bei dem in den Figuren dargestellten Ausführungsbeispielen in der oben liegenden stirnseitigen Abdeckung des doppelwandigen Gehäuses angeordnet.

Zum Zünden ist ein Zündbolzen 11 vorgesehen. Zündbolzen 11 und Zündeinrichtung 10 bzw. der Treibgasgenerator 1 sind zueinander beweglich, bevorzugt in Richtung der Zylinderachse A. Diese Aufeinanderzubewegung kann bei Überschreitung einer auf die Anordnung wirkenden Beschleunigungs- bzw. Verzögerungsschwelle ausgelöst werden, so daß Zündbolzen 11 und Zündeinheit 10 aufeinander schlagen.

Nach Zündung der Zündeinheit 10 wird über die Treibgaskette 12 eine zur Zündung des Treibmittels 7 erforderliche Temperatur erzeugt. Aufgrund des durch das Treibgas erzeugten Druckes werden die beiden ineinander geschobenen Rohre 2 und 3, welche die Doppelwand des Treibgasgeneratorgehäuses bilden, radial nach außen gedehnt und gegen die Innenwand des Führungsrohres 4 gedrückt. Auf diese Weise erfolgt eine örtliche Fixierung des Gasgeneratorgehäuses an der Innenwand des Führungsrohres 4. Das Druckgas entweicht durch die aufgebrochene Öffnung 8 in einen an das stirnseitige Verschlußelement 5 sich anschließenden Druckraum 13 im Führungsrohr 4. Dieser Druckraum 13 kann mit der Rückseite eines Kolbens, beispielsweise über geeignete Gaskanäle, in Wirkverbindung stehen. Der Kolben kann, wie es beispielsweise in den deutschen Patentanmeldungen P 42 00 360.1 (datiert vom 09.01.92) und P 42 08 157.2 (der EP-A-0 560 181 entsprechend) beschrieben ist, mit einem Gurtband bzw. mit einem Aufrollautomaten eines Sicherheitsgurtsystems in einem Kraftfahrzeug zur Beseitigung der Gurtlose durch eine Strafferbewegung oder anderen zu bewegenden Teilen verbunden sein. Es ist jedoch auch möglich, den Druckraum 13 mit einem Gaskanal zu verbinden, der zu einem Airbag geleitet ist.

Die Relativbewegung zwischen Zündbolzen 11 und Zündeinrichtung 10 kann auf zweierlei Art und Weise erfolgen.

Bei einer überhöhten auf den Treibgasgenerator einwirkenden Beschleunigung bzw. Verzögerung kann dieser gegen die Kraft einer nicht näher dargestellten, eine Kraftschwelle darstellenden elastischen Rückstelleinrichtung, beispielsweise in Form einer Feder, aufgrund seiner trägen Masse gegen den Schlagbolzen 11 im Führungsrohr 4 bewegt werden. In diesem Fall kann der Schlagbolzen 11 ortsfest am Führungsrohr 4, das beispielsweise in einer stirnseitigen Abdeckung des Führungsrohres 4 vorgesehen ist, bewegt werden.

Die zweite Bewegungsmöglichkeit besteht darin, daß das Führungsrohr 4 zusammen mit dem darin angeordneten Treibgasgenerator 1 aufgrund ihrer trägen Massen gegen den anderweitig ortsfest angeordneten Schlagbolzen 11 bewegt werden, wobei ebenfalls die Zündeinrichtung 10 auf den Schlagbolzen 11 aufschlägt. Die Bewegungsrichtung erfolgt in Richtung der Zylinderachse A.

Bei dem in Figur 1 dargestellten Ausführungsbeispiel sind die beiden Gehäuseteilen, bestehend aus den beiden Rohren 2 und 3 sowie den zugehörigen stirnseitigen Verschlußelementen bzw. Abdeckungen 9 und 5 ineinander geschoben. Dabei ist die stirnseitige Abdeckung 9 mit dem innenliegenden Rohr 2 zu einem inneren Gehäuseteil verbunden, und das stirnseitige Verschlußelement 5 ist mit dem Außenrohr 3 zu einem äußeren Gehäuseteil verbunden.

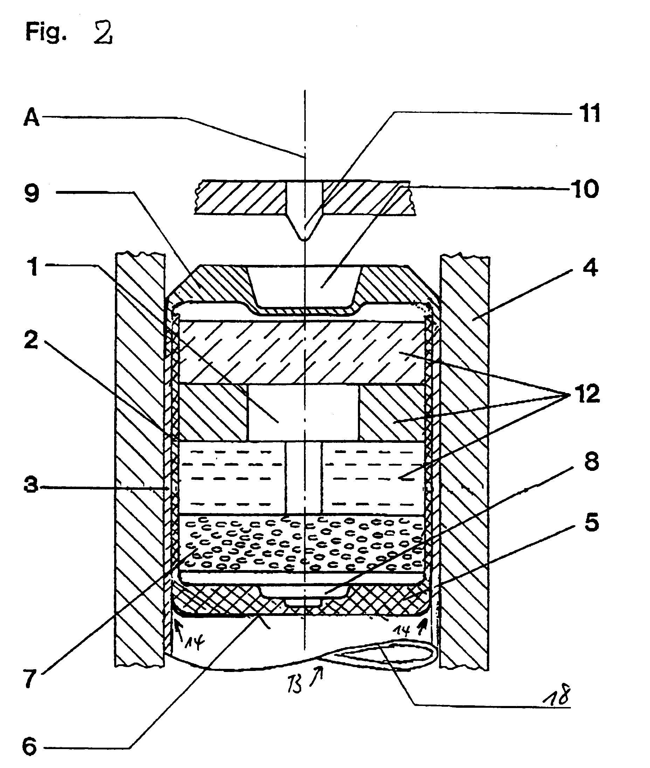

Bei den Ausführungsformen der Figuren 2 bis 4 ist die Anordnung umgekehrt. Die stirnseitige Abdeckung 9 ist mit dem Außenrohr 3 zu einem äußeren Gehäuseteil und das stirnseitige Verschlußelement 5 mit dem Innenrohr 2 zu einem inneren Gehäuseteil verbunden. Bei diesen Ausführungsformen (Figuren 2 bis 4) ist das innere Gehäuseteil (Innenrohr 2 und stirnseitiges Verschlußelement 5) als Treibladungsträger ausgebildet. Das innere Gehäuseteil ist im äußeren Gehäuseteil fixiert. Dies kann dadurch geschehen, daß ein Kleber 14 zwischen dem Innenrohr 2 und dem Außenrohr 3 vorgesehen ist. Es handelt sich hier bevorzugt um einen Kapillarkleber. Dieser Kleber 14 bewirkt eine Fixierung des inneren als Treibladungsträger wirkenden Gehäuseteils im äußeren Gehäuseteil. Das Außenrohr 3 des äußeren Gehäuseteils ist mit einem Rohrteil 18 über den Treibladungsträger hinaus verlängert, so daß im verlängerten Rohrteil 18 der Druckraum 13 gebildet wird.

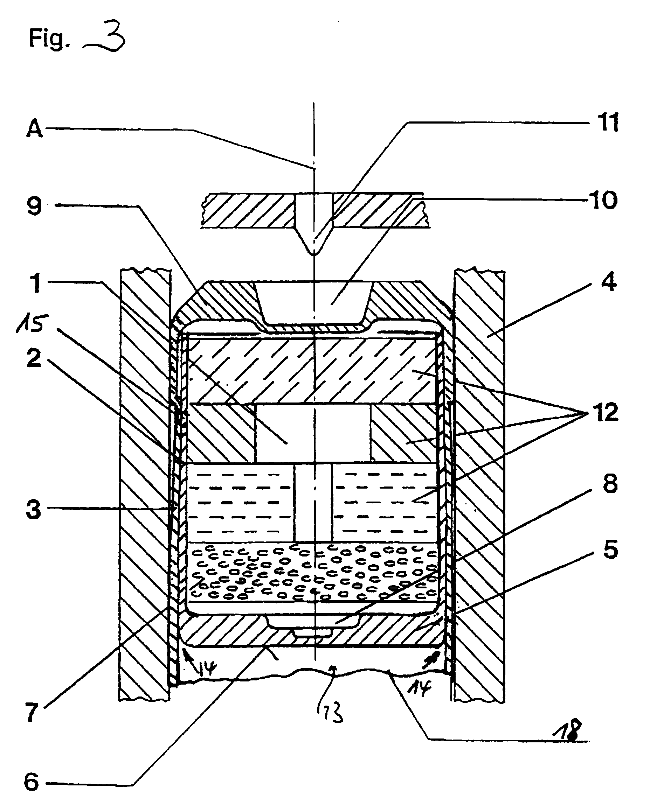

Wie die Figur 3 zeigt, kann auch mit Hilfe einer Verformung des Außenrohres 3 eine Fixierung des inneren als Treibladungsträger ausgebildeten Gehäuseteils erreicht werden. Beim dargestellten Ausführungsbeispiel entsteht eine ringförmige in das Außenrohr 3 eingeformte Konussicke 15. Diese gewährleistet die gewünschte Lagefixierung durch Verpressen des Außenrohres 3 mit dem Innenrohr 2 des Ladungsträgers. Zusätzlich kann der in Zusammenhang mit der Figur 2 schon erläuterte Kapillarkleber 14 zwischen den beiden Rohren zur Fixierung des inneren Gehäuseteils eingesetzt werden.

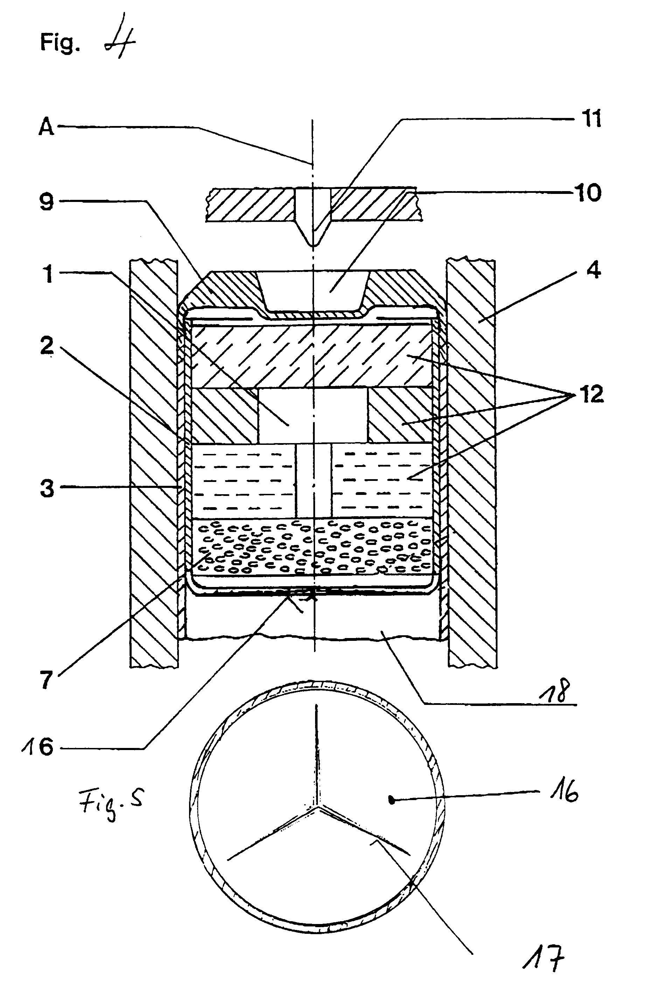

Bei dem in der Figur 4 dargestellten Ausführungsbeispiel ist das stirnseitige Verschlußelement des innenliegenden, als Treibladungsträger dienenden Gehäuseteils als Berstboden 16 ausgebildet. In der Figur 5 ist eine Draufsicht des Berstbodens 16 gezeigt. Der Berstboden 16 besitzt Einschnitte 17. Beim dargestellten Ausführungsbeispiel verlaufen diese Schnitte sternförmig. Es sind drei Schnitte 17 dargestellt. Bei der sternförmigen Anordnung der Einschnitte ist die Einschnittiefe in der Mitte größer als an den jeweiligen äußeren Enden. Die Einschnittiefe nimmt kontinuierlich von der Mitte nach außen hin ab. Beim Ausführungsbeispiel ist ein dreistrahliger Stern dargestellt. Es können auch mehr Einschnitte vorgesehen sein.

Auch bei den Ausführungsformen der Figuren 2 bis 4 können die Außen- und Innenrohre 2 und 3 radial nach außen durch den beim Zünden entstehenden Druck verformt werden, so daß sie im Druckraum 4 liedern. Ein zusätzlicher Halt kann noch dadurch erreicht werden, daß der Schlagbolzen 11 einen festen Halt nach dem Zünden im Druckrohr 4 gewährleistet.

In bevorzugter Weise wird bei den in den Figuren 2 bis 4 dargestellten Ausführungsbeispielen das Außenrohr 3 beweglich im Druckrohr 4 geführt, so daß der Zünder 10 gegen den Zündbolzen 11 bei der axialen Verschiebung geschlagen wird. Hierzu kann beispielsweise mit dem verlängerten Rohrteil 18 eine nicht näher dargestellte träge Masse, welche eine fahrzeugsensitive Masse darstellt, verbunden sein.

Durch die Ausbildung des Berstbodens 16 kann gewährleistet werden, daß für das Anliedern der beiden Rohre 2 und 3 im Druckrohr 4 sich nach dem Zünden ein bestimmter Druck aufbaut, bevor die Treibgase freigegeben werden.

## Patentansprüche

1. Treibgasgeneratoranordnung mit
einem Treibgasgenerator, der in einem Gehäuse (2, 3) eine Zündeinheit und ein ein Treibgas erzeugendes Treibmittel aufweist, sowie
einer das Gehäuse umfassenden Halteeinrichtung für den Treibgasgenerator, wobei das Gehäuse aus zwei ineinandergeschobenen Rohren (2, 3) besteht,
**dadurch gekennzeichnet, daß**
das Gehäuse (2, 3) durch den Treibgasdruck des gezündeten Treibmittels (7) gegen die rohrförmig ausgebildete Halteeinrichtung (4) expandierbar und dadurch an dieser abgestützt und axial fixiert ist, sodaß zusätzliche Abstützhilfen zur Verankerung des Treibgasgenerators in der Halteeinrichtung nicht erforderlich sind.

2. Treibgasgeneratoranordnung, insbesondere nach Anspruch 1, mit einem Treibgasgenerator, der in einem Gehäuse (2, 3) eine Zündeinheit und ein ein Treibgas erzeugendes Treibmittel aufweist, sowie
mit einer Halteeinrichtung für das Gehäuse, wobei das Gehäuse aus zwei ineinandergeschobenen Rohren (2, 3) besteht,
**dadurch gekennzeichnet, daß**
das Gehäuse (2, 3) an einem Ende ein stirnseitiges Verschlußelement (5) aufweist, das eine Ausblasdüseneinrichtung (6) mit einer gestuft ausgebildeten Ausblasdüsenöffnung (8) für das Treibgas enthält, wobei die Ausblasdüseneinrichtung (6) bei nicht gezündetem Treibmittel (7) geschlossen ist.

3. Treibgasgeneratoranordnung nach Anspruch 1 oder 2, dadurch gekennzeichnet, daß das Gehäuse des Treibgasgenerators (1) mittels zweier ineinandergeschobener Rohre, einem Innenrohr (2) und einem Außenrohr (3), doppelwandig ausgeführt ist.

4. Treibgasgeneratoranordnung nach Anspruch 3, dadurch gekennzeichnet, daß zumindest das Innenrohr (2) aus einem durch den Treibgasdruck radial expandierbaren Material besteht.

5. Treibgasgeneratoranordnung nach Anspruch 3 oder 4, dadurch gekennzeichnet, daß das Außenrohr (3) aus einem durch den Treibgasdruck radial expandierbaren Material besteht.

6. Treibgasgeneratoranordnung nach einem der Ansprüche 3 bis 5, dadurch gekennzeichnet, daß das Außenrohr (3) in seiner stirnseitigen Abdeckung (9) die Zündeinheit (10) aufweist.

7. Treibgasgeneratoranordnung nach einem der Ansprüche 1 bis 6, dadurch gekennzeichnet, daß der Treibgasgenerator (1) bei nicht gezündetem Treibmittel (7) in der als Führungsrohr ausgebilderen Halteeinrichtung (4) axial beweglich geführt ist.

8. Treibgasgeneratoranordnung nach Anspruch 7, dadurch gekennzeichnet, daß der Treibgasgenerator (1) oberhalb einer bestimmten auf ihn einwirkenden Beschleunigung bzw. Verzögerung aufgrund seiner trägen Masse im Führungsrohr (4) beweglich ist.

9. Treibgasgeneratoranordnung, nach einem der Ansprüche 1 bis 8, dadurch gekennzeichnet, daß das Führungsrohr (4) mit dem darin angeordneten Treibgasgenerator (1) aufgrund ihrer trägen Massen bei einer bestimmten einwirkenden Beschleunigung bzw. Verzögerung gegen einen ortstesten Schlagbolzen (11) bewegbar sind.

10. Treibgasgeneratoranordnung nach einem der Ansprüche 7 bis 9, dadurch gekennzeichnet, daß der Treibgasgenerator (1) mit seiner Zündeinheit (10) gegen einen gegenüber dem Führungsrohr (4) ortsfest angeordneten Schlagbolzen (11) bewegbar ist.

11. Treibgasgeneratoranordnung nach einem der Ansprüche 7 bis 10, dadurch gekennzeichnet, daß die aus dem Innen- und Außenrohr (2, 3) bestehende Doppelwand des Treibgasgenerators (1) durch das Treibgas des gezündeten Treibmittels (7) gegen die Innenwand des Führungsrohrs (4) gedrückt ist.

12. Treibgasgeneratoranordnung nach einem der Ansprüche 1 bis 11, dadurch gekennzeichnet, daß das doppelwandige Gehäuse des Treibgasgenerators (1) zylindrisch ausgebildet ist.

13. Treibgasgeneratoranordnung nach einem der Ansprüche 1 bis 12, dadurch gekennzeichnet, daß das Gehäuse aus zwei ineinander geschobenen Gehäuseteilen besteht.

14. Treibgasgeneratoranordnung nach Anspruch 13, dadurch gekennzeichnet, daß das innere Gehäuseteil (2, 5; 16) als Treibladungsträger ausgebildet ist.

15. Treibgasgeneratoranordnung nach Anspruch 13 oder 14, dadurch gekennzeichnet, daß das innere Gehäuseteil (2, 5; 16) mit einem Kleber (14) am äußeren Gehäuseteil (3) fixiert ist.

16. Treibgasgeneratoranordnung nach einem der Ansprüche 13 bis 15, dadurch gekennzeichnet, daß das innere Gehäuseteil (2, 5; 16) durch Verformung des Außenrohres (3) in das äußere Gehäuseteil (3) eingepreßt ist.

17. Treibgasgeneratoranordnung nach Anspruch 1, dadurch gekennzeichnet, daß das Gehäuse an der Seite, an welcher die Treibgase freigesetzt werden, einen Berstboden (16, 17) aufweist.

## Claims

1. A propellent gas generator arrangement having a propellent gas generator which in a housing (2, 3) has a firing unit and a propellant for producing a propellent gas, and a holding device, which encloses the housing, for the propellent gas generator, wherein the housing comprises two tubes (2, 3) which are pushed one into the other, characterised in that the housing (2, 3) can be expanded by the propellent gas pressure of the fired propellant (7) against the holding device (4) of a tubular configuration, and is thereby supported against the holding device and axially fixed, so that additional auxiliary support devices are not required for anchoring the propellent gas generator in the holding device.

2. A propellent gas generator arrangement in particular according to claim 1 having a propellent gas generator which in a housing (2, 3) has a firing unit and a propellant for producing a propellent gas, and a holding device for the housing, wherein the housing comprises two tubes (2, 3) which are pushed one into the other, characterised in that at one end the housing (2, 3) has an end closure element (5) which includes a blow-out nozzle means (6) with a blow-out nozzle opening (8) for the propellent gas, the nozzle opening being of a stepped configuration, wherein the blow-out nozzle means (6) is closed when the propellant (7) is not fired.

3. A propellent gas generator arrangement according to claim 1 or claim 2 characterised in that the housing of the propellent gas generator (1) is of a double-wall structure by means of two tubes which are pushed one into the other, an inner tube (2) and an outer tube (3).

4. A propellent gas generator arrangement according to claim 3 characterised in that at least the inner tube (2) comprises a material which can radially expand due to the propellent gas pressure.

5. A propellent gas generator arrangement according to claim 3 or claim 4 characterised in that the outer tube (3) comprises a material which can radially expand due to the propellent gas pressure.

6. A propellent gas generator arrangement according to one of claims 3 to 5 characterised in that the outer tube (3) has the firing unit (10) in its end cover means (9).

7. A propellent gas generator arrangement according to one of claims 1 to 6 characterised in that the propellent gas generator (1) is guided axially movably in the holding device (6) which is in the form of a guide tube, when the propellent (7) is not fired.

8. A propellent gas generator arrangement according to claim 7 characterised in that the propellent gas generator (1) is movable in the guide tube (4), above a given acceleration or deceleration acting thereon, by virtue of its inertia mass.

9. A propellent gas generator arrangement according to one of claims 1 to 8 characterised in that the guide tube (4) with the propellent gas generator (1) arranged therein, by virtue of their inertia masses, are movable against a stationary firing pin (11), in the event of a given acceleration or deceleration taking effect.

10. A propellent gas generator arrangement according to one of claims 7 to 9 characterised in that the propellent gas generator (1) with its firing unit (10) is movable against a firing pin (11) arranged stationarily with respect to the guide tube (4).

11. A propellent gas generator arrangement according to one of claims 7 to 10 characterised in that the double wall of the propellent gas generator (1), comprising the inner and outer tubes (2, 3) is pressed against the inside wall of the guide tube (4) by the propellent gas of the fired propellant (7).

12. A propellent gas generator arrangement according to one of claims 1 to 11 characterised in that the double-wall housing of the propellent gas generator (1) is of a cylindrical configuration.

13. A propellent gas generator arrangement according to one of claims 1 to 12 characterised in that the housing comprises two housing portions which are pushed one into the other.

14. A propellent gas generator arrangement according to claim 13 characterised in that the inner housing portion (2, 5; 16) is in the form of a propellent charge carrier.

15. A propellent gas generator arrangement according to claim 13 or claim 14 characterised in that the inner housing portion (2, 5; 16) is fixed by an adhesive (14) to the outer housing portion (3).

16. A propellent gas generator arrangement according to one of claims 13 to 15 characterised in that the inner housing portion (2, 5; 16) is pressed into the outer housing portion (3) by deformation of the outer tube (3).

17. A propellent gas generator arrangement according to claim 1 characterised in that at the side at which the propellent gases are liberated the housing has a bursting bottom (16, 17).

## Revendications

1. Dispositif générateur de gaz propulseur, comprenant un générateur de gaz propulseur qui abrite dans un carter (2, 3) une unité de mise à feu et un agent propulseur produisant un gaz propulseur, ainsi qu'un dispositif de support pour le générateur de gaz propulseur enveloppant le carter, le carter étant composé de deux tubes (2, 3) emboîtés l'un dans l'autre, **caractérisé en ce** que le carter (2, 3) peut être expansé par la pression du gaz propulseur de l'agent propulseur (7) contre le dispositif de support (4) de forme tubulaire, et est de ce fait supporté et fixé dans le sens axial sur celui-ci, de sorte que des moyens d'appui supplémentaires ne s'imposent pas pour l'ancrage du générateur de gaz propulseur dans le dispositif de support.

2. Dispositif générateur de gaz propulseur, en particulier suivant la revendication 1, comprenant un générateur de gaz propulseur qui abrite dans un carter (2, 3) une unité de mise à feu et un agent propulseur produisant un gaz propulseur, ainsi qu'un dispositif de support pour le carter, le carter étant composé de deux tubes (2, 3) emboîtés l'un dans l'autre, caractérisé en ce que le carter (2, 3) présente à l'une des extrémités un élément de fermeture frontal (5) qui comporte un système de buse éjectrice (6) avec une sortie de buse éjectrice (8) étagée pour le gaz propulseur, le système de buse électrice (6) étant fermé lorsque l'agent propulseur (7) n'est pas mis à feu.

3. Dispositif générateur de gaz propulseur selon la revendication 1 ou 2, caractérisé en ce que le carter du générateur de gaz propulseur (1) est réalisé à double paroi au moyen de deux tubes emboîtés l'un dans l'autre, à savoir un tube intérieur (2) et un tube extérieur (3).

4. Dispositif générateur de gaz propulseur selon la revendication 3, caractérisé en ce qu'au moins le tube intérieur (2) est constitué d'un matériau pouvant être expansé radialement par la pression du gaz propulseur.

5. Dispositif générateur de gaz propulseur selon la revendication 3 ou 4, caractérisé en ce que le tube extérieur (3) est constitué d'un matériau pouvant être expansé radialement par la pression du gaz propulseur.

6. Dispositif générateur de gaz propulseur selon l'une des revendications 3 à 5, caractérisé en ce que le tube extérieur (3) comporte dans son recouvrement frontal (9) l'unité de mise à feu (10).

7. Dispositif générateur de gaz propulseur selon l'une des revendications 1 à 6, caractérisé en ce que, lorsque l'agent propulseur (7) n'est pas mis à feu, le générateur de gaz propulseur (1) est guidé de manière axialement mobile dans le dispositif de support (4) conformé en tube de guidage.

8. Dispositif générateur de gaz propulseur selon la revendication 7, caractérisé en ce que, en raison de sa masse inerte, le générateur de gaz propulseur (1) peut être déplacé dans le tube de guidage (4) au-delà d'une certaine accélération ou décélération agissant sur ledit générateur de gaz propulseur.

9. Dispositif générateur de gaz propulseur selon l'une des revendications 1 à 8, caractérisé en ce que, en raison de leurs masses inertes, le tube de guidage (4) et le générateur de gaz propulseur (1) logé à l'intérieur de celui-ci, peuvent être déplacés, sous l'effet d'une certaine accélération ou décélération, contre un percuteur (11) fixe.

10. Dispositif générateur de gaz propulseur selon l'une des revendications 7 à 9, caractérisé en ce que le générateur de gaz propulseur (1) peut être déplacé avec son unité de mise à feu (10) contre un percuteur (11) monté fixe par rapport au tube de guidage (4).

11. Dispositif générateur de gaz propulseur selon l'une des revendications 7 à 10, caractérisé en ce que la double paroi du générateur de gaz propulseur (1) constituée des tubes intérieur et extérieur (2, 3) est appliquée par le gaz propulseur de l'agent propulseur (7) mis à feu contre la paroi intérieure du tube de guidage (4).

12. Dispositif générateur de gaz propulseur selon l'une des revendications 1 à 11, caractérisé en ce que le carter à double paroi du générateur de gaz propulseur (1) est de forme cylindrique.

13. Dispositif générateur de gaz propulseur selon l'une des revendications 1 à 12, caractérisé en ce que le carter est constitué de deux parties de carter emboîtées l'une dans l'autre.

14. Dispositif générateur de gaz propulseur selon la revendication 13, caractérisé en ce que la partie intérieure du carter (2, 5 ; 16) est conformée en porteur de charge propulsive.

15. Dispositif générateur de gaz propulseur selon la revendication 13 ou 14, caractérisé en ce que la partie intérieure du carter (2, 5 ; 16) est fixée au moyen d'une colle (14)sur la partie extérieure (3) du carter.

16. Dispositif générateur de gaz propulseur selon l'une des revendications 13 à 15, caractérisé en ce que la partie intérieure du carter (2, 5 ; 16) est pressée, par déformation du tube extérieur (3), dans la partie extérieure (3) du carter.

17. Dispositif générateur de gaz propulseur selon la revendication 1, caractérisé en ce que le carter présente sur le côté sur lequel sont libérés les gaz propulseurs, un fond éclatable (16, 17).
